# EUROPÄISCHE PATENTSCHRIFT

(11) **EP 0 997 237 B1**
(45) Veröffentlichungstag und Bekanntmachung des Hinweises auf die Patenterteilung: **15.05.2002**
(21) Anmeldenummer: 98119983.9
(22) Anmeldetag: 22.10.1998
(51) Int. Cl.: B25J 15/02

(54) **Fluidbetätigter Greifer**
Fluid actuated gripper
Pince de préhension actionée par fluide

(43) Veröffentlichungstag der Anmeldung: 03.05.2000
(73) Patentinhaber: FESTO AG & Co, 73734 Esslingen (DE)
(72) Erfinder: Bellandi, Giuseppe, I-25030 Roncadelle (BS) (IT); Maffeis, Giuseppe, I-25030 Roncadelle (BS) (IT)
(74) Vertreter: Abel, Martin, Dipl.-Ing.

(56) Entgegenhaltungen:
- EP-A- 0 344 954
- DE-A- 3 806 148
- DE-U- 9 214 477

## Beschreibung

Die Erfindung betrifft einen fluidbetätigten Greifer, mit einem Gehäuse, das einen Aufnahmeraum enthält, in dem sich zwei durch Fluidkraft zu gegensinnigen axialen Arbeitsbewegungen antreibbare Kolben befinden, die jeweils mit einem Greifelement verbunden oder verbindbar sind, mit einer Synchronisationseinrichtung zum Synchronisieren der Arbeitsbewegungen der beiden Kolben, die über an den beiden Kolben vorgesehene erste Verzahnungsmittel und über gleichzeitig mit den beiden ersten Verzahnungsmitteln in Eingriff stehende, an einem Drehkörper vorgesehene zweite Verzahnungsmittel verfügt, und mit an den einander zugewandten axialen Endbereichen der beiden Kolben vorgesehenen sich axial überlappenden Axialvorsprüngen, die sich quer zur Längsachse des Aufnahmeraumes mit Abstand gegenüberliegen und die an ihren einander zugewandten Seitenflächen mit den ersten Verzahnungsmitteln versehen sind, wobei der die zweiten Verzahnungsmittel aufweisende Drehkörper in dem zwischen den beiden Axialvorsprüngen vorhandenen Zwischenraum angeordnet und mit sich quer zur Längsachse des Aufnahmeraumes erstreckender Drehachse bezüglich dem Gehäuse drehbar gelagert ist.

Ein fluidbetätigter Greifer dieser Art, der auch als Parallel-Greifer bezeichnet wird, geht aus der DE-U-9214477 hervor. Dieser verfügt über ein Gehäuse mit einem länglichen Aufnahmeraum, in dem zwei Kolben angeordnet sind, die jeweils über einen die stirnseitige Wand des Gehäuses durchsetzenden Führungsbolzen mit einem Greifelement verbunden sind. Die beiden Kolben werden bei Fluidbeaufschlagung des zwischen ihnen liegenden inneren Aufnahmeraumabschnittes voneinander weg bewegt und bei gleichzeitiger Fluidbeaufschlagung der beiden äußeren Aufnahmeraumabschnitte aneinander angenähert. Auf diese Weise läßt sich eine Öffnungs- oder Schließbewegung der Greifelemente herbeiführen, wobei die Synchronisationseinrichtung für eine gleichförmige Bewegung der beiden Kolben und somit der Greifelemente sorgt.

Bei einem aus der US-A-5657973 bekannten Greifer umfaßt die Synchronisationseinrichtung eine Gewindestange, die die beiden Kolben mit Gewindeeingriff durchsetzt. Indem im Eingriffsbereich mit dem einen Kolben ein Linksgewinde und im Eingriffsbereich mit dem anderen Kolben ein Rechtsgewinde vorgesehen ist, ergibt sich über die Gewindestange eine synchronisierte Kopplung der Bewegungen der beiden Kolben. Nachteilig bei dieser Anordnung ist allerdings die im Bereich der Gewindeeingriffe auftretende hohe Reibung, die seitens der Kolben hohe Stellkräfte erfordert, was einer Realisierung kleiner und kleinster Baugrößen entgegensteht. Außerdem bedarf es aufwendiger Abdichtungsmaßnahmen in den Durchdringungsbereichen zwischen der Gewindestange und den Kolben, um den inneren Aufnahmeraumabschnitt von den äußeren Aufnahmeraumabschnitten fluiddicht abzusperren.

Es ist die Aufgabe der vorliegenden Erfindung, einen Greifer der eingangs genannten Art zu schaffen, der sich bei einfachem Aufbau durch eine reibungsarme Betriebsweise auszeichnet und die Realisierung kleiner Baugrößen vereinfacht.

Zur Lösung dieser Aufgabe ist vorgesehen, daß das Gehäuse im Umfangsbereich der beiden Kolben jeweils mit einem sich axial erstreckenden, einerseits radial innen zum Aufnahmeraum und andererseits radial außen zu einer Außenfläche des Gehäuses offenen Längsschlitz versehen ist, und daß jeder dieser Längsschlitze von einem Mitnehmer durchsetzt ist, der eine Mitnahmeverbindung zwischen dem jeweils zugeordneten Kolben und einem von zwei im äußeren Bereich des Gehäuses verschiebbar angeordneten Greifelementträgern oder Greifelementen herstellt, wobei die Mitnehmer rechtwinkelig zur Drehachse des Drehkörpers verlaufen.

Auf diese Weise erstreckt sich der Verzahnungseingriff zwischen den an den Kolben und an dem Drehkörper vorgesehenen Verzahnungsmitteln weiterhin über eine nur geringe axiale Länge des Aufnahmeraumes, was geringe Reibungswerte zur Folge hat. Aufgrund der zueinander rechtwinkeligen Ausrichtung der Mitnehmer und der Drehachse des Drehkörpers kann zudem die Verkantungsneigung im Bereich des Verzahnungseingriffes verringert werden. Schon relativ geringe Stellkräfte reichen aus, um die Kolben mit zugeordneten Greifelementen zu verschieben, was die Realisierung kleiner Baugrößen begünstigt. Die Montage der miteinander kämmenden Bestandteile des Greifers ist relativ einfach und auch der bauliche Aufwand ist reduziert, weil sich eine abgedichtete Durchführung des Drehkörpers durch die Kolben erübrigt. Dies erhöht auch die Funktionssicherheit, weil die Anzahl der Dichtstellen verringert ist.

Vorteilhafte Weiterbildungen der Erfindung gehen aus den Unteransprüchen hervor.

Eine sich insbesondere für Produkte mit größeren Abmessungen eignende Bauform sieht vor, daß die Axialvorsprünge zahnstangenartig ausgebildet sind, wobei ihre einander zugewandten Verzahnungen die ersten Verzahnungsmittel bilden. Der Drehkörper ist in diesem Fall zweckmäßigerweise als Zahnrad bzw. Ritzel ausgebildet.

Insbesondere bei kleinen bis kleinsten Baugrößen empfiehlt sich eher eine Ausführungsform, bei der die ersten Verzahnungsmittel jeweils nur eine einzige Vertiefung aufweisen, wobei die am Drehkörper angeordneten zweiten Verzahnungsmittel von lediglich zwei einander diametral gegenüberliegenden Vorsprüngen gebildet sind, die jeweils mit einer der Vertiefungen der ersten Verzahnungsmittel in Eingriff stehen. Denkbar wäre hier auch eine umgekehrte Anordnung mit kolbenseitig angeordneten Vorsprüngen und am Drehkörper vorgesehenen Vertiefungen.

Zugunsten einer einfachen Montage ist es empfehlenswert, den Drehkörper drehbar auf einer Lagerachse anzuordnen, die den Aufnahmeraum durchsetzt und mit ihren beiden axialen Endbereichen drehfest im Gehäuse fixiert ist. Dabei kann der Drehkörper durchaus axial verschieblich auf der Lagerachse sitzen.

Die Befestigung der Lagerachse erfolgt zweckmäßigerweise dadurch daß sie in eine das Gehäuse durchsetzende und dabei den Aufnahmeraum kreuzende Querbohrung eingepreßt ist. Zusätzlich oder alternativ kann auch vorgesehen sein, daß die Lagerachse in der Querbohrung mit Abstand innerhalb des Gehäuses endet, wobei in die äußeren Endabschnitte der Querbohrung insbesondere von Schraubelementen gebildete, gehäusefest verankerte Verschlußelemente eingesetzt sind.

Nachfolgend wird die Erfindung anhand der beiliegenden Zeichnung näher erläutert. In dieser zeigen:
- Figur 1: eine bevorzugte Bauform des erfindungsgemäßen Greifers in perspektivischer Darstellung und teilweise aufgebrochen,
- Figur 2: den Greifer aus Figur 1 im Längsschnitt gemäß Schnittlinie II-II aus Figur 3,
- Figur 3: den Greifer aus Figuren 1 und 2 im Querschnitt gemäß Schnittlinie III-III aus Figur 2,
- Figur 4: eine weitere Ausführungsform des Greifers, der sich von demjenigen der Figuren 1 bis 3 im wesentlichen nur durch die andere Ausgestaltung der Synchronisationseinrichtung unterscheidet, im Längsschnitt gemäß Schnittlinie IV-IV aus Figur 5 und
- Figur 5: den Greifer aus Figur 4 im Querschnitt gemäß Schnittlinie V-V.

Der in der Zeichnung gezeigte fluidbetätigte Greifer verfügt über ein zum Beispiel quaderförmiges Gehäuse 1 mit einem rohrartigen Mittelabschnitt 2, der stirnseitig durch Abschlußdeckel 3 fluiddicht abgeschlossen ist. Im Gehäuse befindet sich ein insbesondere zylindrisch konturierter länglicher Aufnahmeraum 4, in dem axial aufeinanderfolgend zwei Kolben 5, 5' axial verschiebbar angeordnet sind.

Zwischen den beiden Kolben 5, 5' befindet sich keine Trennwand. Daher begrenzen die beiden Kolben 5, 5' gemeinsam einen axial zwischen Ihnen angeordneten inneren Aufnahmeraumabschnitt 6. Auf der diesem axial entgegengesetzten Seiten eines jeweiligen Kolbens 5, 5' befindet sich ein äußerer Aufnahmeraumabschnitt 7, 7' der einerseits vom zugeordneten Kolben 5, 5' und andererseits vom benachbarten Abschlußdeckel 3 begrenzt wird.

Ringförmige Dichtungen 8, 9 am Außenumfang eines jeweiligen Kolbens 5, 5' arbeiten dichtend mit der Innenfläche des Aufnahmeraumes 4 zusammen und bewirken somit eine fluiddichte Abtrennung zwischen dem inneren Aufnahmeraumabschnitt 6 und den beiden äußeren Aufnahmeraumabschnitten 7, 7'.

Das Gehäuse 1 ist im Umfangsbereich der beiden Kolben 5, 5' jeweils mit einem sich axial erstreckenden Längsschlitz 12, 12' versehen, der einerseits radial innen in den Aufnahmeraum 4 und andererseits radial außen zu einer Außenfläche des Gehäuses 1 offen ist.

Jeder der beiden axial beabstandet zueinander angeordneten Längsschlitze 12, 12' ist von einem Mitnehmer 13, 13' durchsetzt, der eine Mitnahmeverbindung zwischen dem jeweils zugeordneten Kolben 5, 5' und einem von zwei im äußeren Bereich des Gehäuses 1 verschiebbar angeordneten Greifelementträgern 14, 14' herstellt.

Die Mitnehmer 13, 13' sind beim Ausführungsbeispiel stiftartig ausgeführt, wobei sie mit ihren inneren Endbereichen in Ausnehmungen der Kolben 5, 5' und mit ihren äußeren Endbereichen in Ausnehmungen der Greifelementträger 14, 14' fest verankert sind, beispielsweise durch Einpressen.

Die beiden Greifelementträger 14, 14' sind jeweils seitlich neben einem der Kolben 5,5 ' angeordnet und über eine Linearführungseinrichtung 15 verschiebbar am Gehäuse 1 gelagert. Die Verschieberichtung der Greifelementträger 14, 14' stimmt mit derjenigen der Kolben 5, 5' überein.

Jeder Greifelementträger 14, 14' ist mit Befestigungsmitteln 16, beispielsweise in Gestalt von Gewindebohrungen, versehen, die ein lösbares bzw. auswechselbares Befestigen von nur strichpunktiert angedeuteten Greifelementen 17 ermöglichen. Diese Greifelemente 17 könnten auch als Greifbacken bezeichnet werden. Denkbar wäre es auch, die Greifelemente 17 ohne Zwischenschaltung separater Greifelementräger 14, 14' an den Kolben 5, 5' festzulegen.

Jeder Kolben 5, 5' trägt zwei mit axialem Abstand koaxial zueinander angeordnete ringförmige Dichtungen 8, 9. Sie sind so plaziert, daß sich der dem betreffenden Kolben zugeordnete Längsschlitz 12, 12' in jeder der möglichen Axialpositionen des betreffenden Kolbens 5, 5' zwischen den beiden Dichtungen 8, 9 befindet. Dadurch ist sichergestellt, daß aus dem Aufnahmeraum 4 kein Druckmedium durch die Längsschlitze 12, 12' hindurch entweichen kann.

Eine im Gehäuse 1 verlaufende erste Fluidkanalanordnung 18 mündet einenends in den inneren Aufnahmeraumabschnitt 6 und andernends über eine erste Anschlußöffnung 22 an geeigneter Stelle an der Außenfläche des Gehäuses 1. Eine ebenfalls in der Wandung des Gehäuses 1 verlaufende zweite Fluidkanalanordnung 19 mündet zum einen gleichzeitig in die beiden äußeren Aufnahmeraumabschnitte 7, 7' und zum andern über eine zweite Anschlußöffnung 23 an geeigneter Stelle der Außenfläche des Gehäuses 1, insbesondere in der Nachbarschaft der ersten Anschlußöffnung 22.

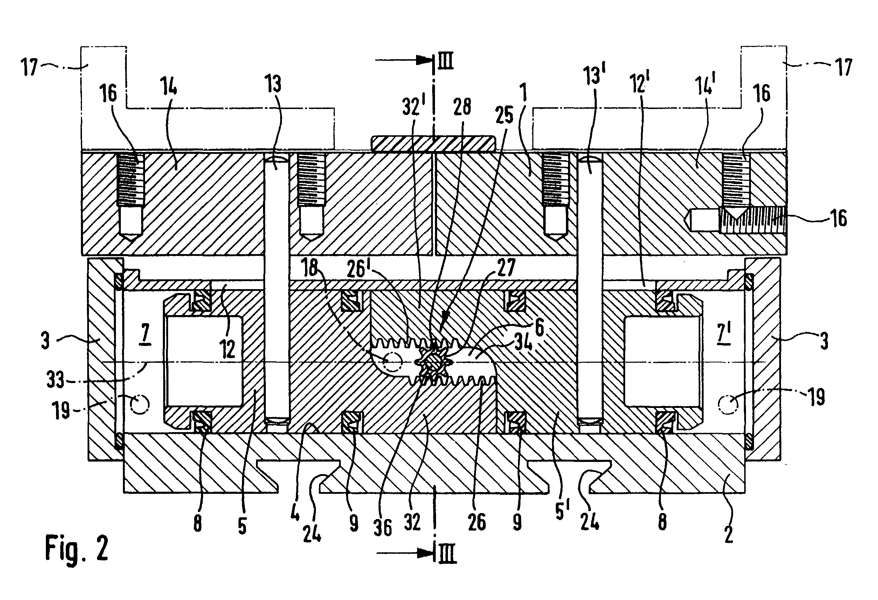

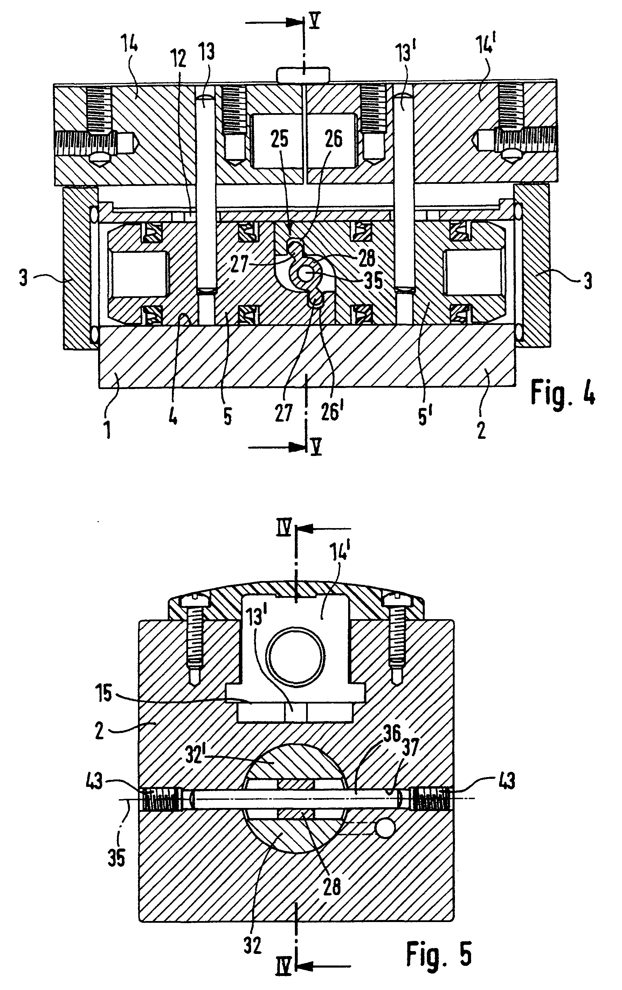

Im Betrieb des Greifers ist über die Fluidkanalanordnungen 18, 19 eine gesteuerte Fluidbeaufschlagung der Aufnahmeraumabschnitte 6, 7, 7' möglich, um eine Verschiebebewegung der Kolben 5, 5' herbeizuführen. Als Betätigungsfluid kommt zweckmäßigerweise Druckluft zum Einsatz, deren Zufuhr bzw. Abfuhr unter Zwischenschaltung einer nicht näher gezeigten Ventileinrichtung gesteuert wird. Bei Fluidbeaufschlagung des inneren Aufnahmeraumabschnittes 6 und gleichzeitiger Entlüftung der beiden äußeren Aufnahmeraumabschnitte 7, 7' entfernen sich die beiden Kolben 5, 5' voneinander, bis sie an den Abschlußdeckeln 3 zur Anlage gelangen oder sonstige Anschlagmittel wirksam werden. Bei gleichzeitiger Fluidbeaufschlagung der äußeren Aufnahmeraumabschnitte 7, 7' in Verbindung mit einer Entlüftung des inneren Aufnahmeraumabschnittes 6 nähern sich die Kolben 5, 5' einander an, bis sie gemäß Figuren 2 und 4 aneinander zur Anlage gelangen oder andere Anschlagmittel wirksam werden. Die Bewegung der Kolben wird über die Mitnehmer 13, 13' auf die Greifelementträger 14, 14' bzw. die Greifelemente 17 übertragen, die somit eine Greiffunktion bezüglich eines zu greifenden Gegenstandes ausführen können. Eingesetzt wird der Greifer insbesondere für beliebige Handhabungszwecke insbesondere im Bereich der Fertigungs- und Montagetechnik, wobei er unter Mitwirkung nicht näher gezeigter Handhabungsgeräte wunschgemäß positioniert wird, an denen er über geeignete Befestigungsmittel 24 festgelegt ist. Letztere befinden sich zweckmäßigerweise an der den Greifelementen 17 entgegengesetzten Längsseite des Gehäuses 1.

Um eine gleichförmige Bewegung der Kolben 5, 5' und somit der mit diesen bewegungsgekoppelten Greifelemente 17 zu erhalten, ist eine Synchronisationseinrichtung 25 vorgesehen. Sie befindet sich in dem inneren Aufnahmeraumabschnitt 6 und bewirkt eine Bewegungskopplung der beiden Kolben 5, 5' derart, daß sich die beiden Kolben 5, 5' stets nur gleichzeitig mit der gleichen Geschwindigkeit und mit gleicher Wegstrecke in einander entgegengesetzte Richtungen verlagern lassen. Durch diese zwangsweise Kopplung könnte prinzipiell auch dann ein Betrieb des Greifers erfolgen, wenn nur einer der äußeren Aufnahmeraumabschnitte 7, 7' an die zweite Fluidkanalanordnung 19 angeschlossen wäre. Die Verlagerung eines Kolbens in einer Richtung bewirkt automatisch eine gegensinnige, also axial entgegensetzt gerichtete Bewegung des anderen Kolbens. Die Synchronisationseinrichtung 25 verfügt über an den beiden Kolben 5, 5' vorgesehene erste Verzahnungsmittel 26, 26' und über gleichzeitig mit diesen beiden ersten Verzahnungsmitteln in Verzahnungseingriff stehende zweite Verzahnungsmittel 27, die an einem Drehkörper 28 vorgesehen sind.

Jeder Kolben 5, 5' verfügt an seinem dem anderen Kolben zugewandten axialen Endbereich über einen zu dem anderen Kolben ragenden Axialvorsprung 32, 32'. Die Axialvorsprünge 32, 32' sind bezüglich des Zentrums des Aufnahmeraumes 4 außermittig angeordnet, wobei sie sich axial überlappen und einander quer und insbesondere rechtwinkelig zur Längsachse 33 des Aufnahmeraumes 4 mit Abstand gegenüberliegen. Die ersten Verzahnungsmittel 26, 26' sind an den einander zugewandten Seitenflächen der Axialvorsprünge 32, 32' vorgesehen und in diese zweckmäßigerweise integral eingearbeitet.

Beim Ausführungsbeispiel hat jeder Axialvorsprung 32, 32' eine kreissegmentartige Querschnittsgestalt. Deren kreisbogenförmig konturierter Flächenabschnitt bildet zweckmäßigerweise eine unmittelbare axiale Verlängerung der Umfangsfläche des zugeordneten Kolbens 5, 5' und liegt an der Innenfläche des Aufnahmeraumes 4 an. Vorzugsweise ist also ein jeweiliger Axialvorsprung 32, 32' auf der den ersten Verzahnungsmitteln 26, 26' radial entgegengesetzten Außenseite an der Innenfläche des Aufnahmeraumes 4 quer zu dessen Längsachse 33 abgestützt.

Der Drehkörper 28 befindet sich in dem zwischen den ersten Verzahnungsmitteln 26, 26' der Axialvorsprünge 32, 32' vorhandenen Zwischenraum 34, wobei er so ausgerichtet ist, daß sich seine Drehachse 35 quer und insbesondere rechtwinkelig zur Längsachse 33 des Aufnahmeraumes 4 erstreckt. Die Anordnung ist insbesondere so getroffen, daß die Drehachse 35 die Längsachse 33 des Aufnahmeraumes 4 im rechten Winkel kreuzt.

Bei einer Axialbewegung der Kolben 5, 5' vollführt der Drehkörper 28 eine Drehbewegung um seine Drehachse 35, wobei er mit seinen zweiten Verzahnungsmitteln 27 stets an diametral gegenüberliegenden Bereichen mit den beiden ersten Verzahnungsmitteln 26, 26' der Kolben 5, 5' in Eingriff steht.

Die Lagerung des Drehkörpers 28 erfolgt zweckmäßigerweise unter Vermittlung einer gehäusefest unverdrehbar fixierten Lagerachse 36. Hierzu kann eine Querbohrung 37 vorgesehen sein, die das Gehäuse 1 durchzieht und den Aufnahmeraum 4 im Bereich des Zwischenraumes 34 kreuzt. Auf diese Weise ergeben sich zwei auf diametral entgegengesetzten Seiten des Aufnahmeraumes 4 angeordnete, koaxial miteinander fluchtende Bohrungsabschnitte 38, die jeweils einen Endabschnitt der zum Beispiel stiftartigen Lagerachse 36 aufnehmen, welche dabei den Aufnahmeraum 4 mit einem Lagerabschnitt 42 diametral durchquert.

Beim Ausführungsbeispiel ist die Lagerachse 36 mit ihren Endabschnitten leicht in die Bohrungsabschnitte 38 eingepreßt und auf diese Weise in ihrer Axialposition fixiert. Als zusätzliche Sicherungsmaßnahme ist allerdings vorgesehen, daß die Lagerachse 36 mit Abstand zur Außenfläche des Gehäuses 1 innerhalb desselben endet, wobei in die äußeren Endabschnitte der Querbohrung 37 gehäusefest verankerte Verschlußelemente 43 eingesetzt sind. Die Verankerung kann am einfachsten dadurch geschehen, daß die Verschlußelemente als Schraubelemente ausgeführt werden, die in mit einem Innengewinde versehene Endabschnitte der Querbohrung 37 fest eingeschraubt werden.

Die Verschlußelemente 43 sind zweckmäßigerweise dichtend in das Gehäuse 1 eingesetzt, um einen Fluidaustritt durch die Querbohrung 37 hindurch zu verhindern.

Der Drehkörper 28 sitzt frei drehbar auf dem Lagerabschnitt 42 der Lagerachse 33. Beim Ausführungsbeispiel ist zudem eine axiale Verschiebebewegung des Drehkörpers 28 mit Bezug zur Lagerachse 36 möglich, welche letztere somit keiner Anschlagmittel bedarf und dementsprechend einfach hergestellt werden kann.

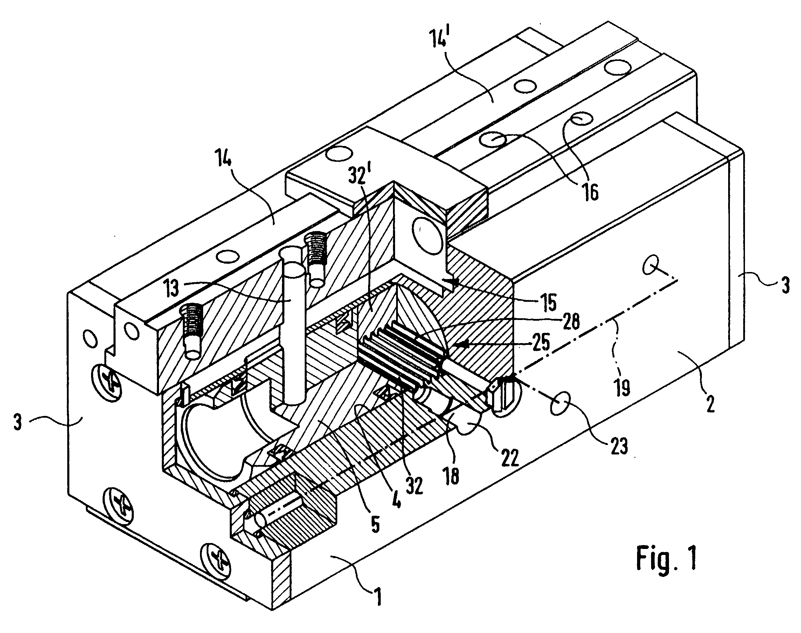

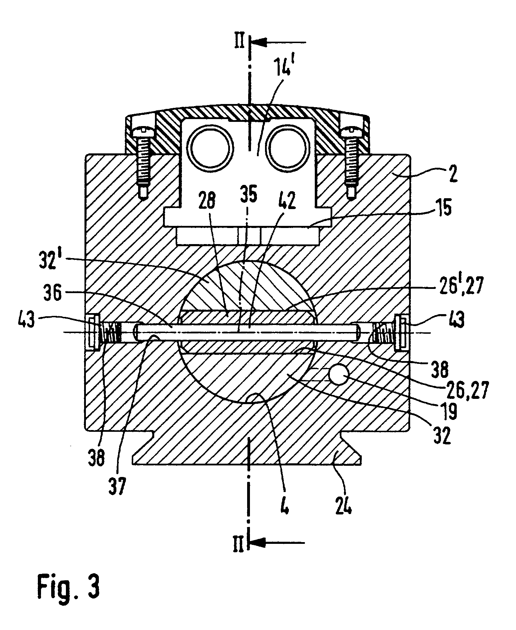

Beim Ausführungsbeispiel der Figuren 1 bis 3 entspricht die axiale Länge des Drehkörpers 28 im wesentlichen dem Durchmesser des Aufnahmeraumes 4, so daß der Drehkörper 28 mit geringerem Axialspiel im Aufnahmeraum 4 fixiert ist. Durch geeignete Fettungs- bzw. Schmiermaßnahmen kann dabei einem Verschleiß entgegenwirkt werden. Beim Ausführungsbeispiel der Figuren 4 und 5 kommt ein Drehkörper 28 zum Einsatz, dessen axiale Länge um einiges geringer ist als der Durchmesser des Aufnahmeraumes 4.

In allen Fällen kann zur Verringerung des Verschleißes auf aus Kunststoffmaterial bestehende Drehkörper 28 zurückgegriffen werden.

Der Greifer gemäß Figuren 1 bis 3 ist insbesondere für größere Baugrößen vorgesehen, bei denen ein verhältnismäßig großer Hub der Greifelemente und dementsprechend auch der Kolben 5, 5' benötigt wird. Die Axialvorsprünge 32, 32' sind hier zahnstangenähnlich ausgebildet, wobei ihre einander zugewandten, sich in einer Ebene erstreckenden Verzahnungen die ersten Verzahnungsmittel 26, 26' bilden. Beim Ausführungsbeispiel befinden sich die ersten Verzahnungsmittel 26, 26' an dem im Querschnitt gesehen linearen Konturabschnitt der im Querschnitt kreissegmentartig konturierten Axialvorsprünge 32, 32'. Die einzelnen Zähne und Vertiefungen der ersten Verzahnungsmittel 26, 26' verlaufen quer zur Längsachse 33 des Aufnahmeraumes 4, wobei sie in Richtung der Längsachse 33 aufeinanderfolgend angeordnet sind.

Der Drehkörper 28 ist in diesem Falle zweckmäßigerweise nach Art eines Zahnrades ausgeführt, das an seinem radial nach außen weisenden Außenumfang die zweiten Verzahnungsmittel 27 aufweist, wobei zweckmäßigerweise auf ein geradverzahntes Stirnrad zurückgegriffen wird. Bei der Hubbewegung der Kolben 5, 5' läuft der zahnradartige Drehkörper 28 auf den ersten Verzahnungsmitteln 26, 26' ab, wobei er eine beliebige Anzahl von Umdrehungen ausführen kann. Greifer mit unterschiedlichem Greifhub lassen sich hier einfach durch Verwendung von unterschiedlich langen Axialvorsprüngen 32, 32' bzw. ersten Verzahnungsmitteln 26, 26' realisieren.

Sind nur geringe Hübe der Greifelemente 17 erforderlich, so daß der Drehkörper 28 keine vollständige Umdrehung ausführen muß, kann auch auf eine Bauform gemäß Figuren 4 und 5 zurückgegriffen werden. Hier sind die ersten Verzahnungsmittel 26, 26' jeweils von nur einer einzigen Vertiefung gebildet, wobei die am Drehkörper 28 vorgesehenen zweiten Verzahnungsmittel 27 aus zwei einander diametral gegenüberliegend angeordneten Vorsprüngen bestehen, die in jeweils eine der Vertiefungen eingreifen. Um eine ruckfreie Bewegung zu ermöglichen, sind die Vorsprünge zweckmäßigerweise abgerundet.

Alternativ wäre es auch denkbar, eine umgekehrte Anordnung vorzusehen, so daß die ersten Verzahnungsmittel 26, 26' jeweils von einem Vorsprung gebildet wären, während die zweiten Verzahnungsmittel 27 in Gestalt diametral entgegengesetzt angeordneter Vertiefungen ausgeführt wären, in die jeweils einer der Vorsprünge eingreift.

## Patentansprüche

1. Fluidbetätigter Greifer, mit einem Gehäuse (1), das einen Aufnahmeraum (4) enthält, in dem sich zwei durch Fluidkraft zu gegensinnigen axialen Arbeitsbewegungen antreibbare Kolben (5, 5') befinden, die jeweils mit einem Greifelement (17) verbunden oder verbindbar sind, mit einer Synchronisationseinrichtung (25) zum Synchronisieren der Arbeitsbewegungen der beiden Kolben (5, 5'), die über an den beiden Kolben (5, 5') vorgesehene erste Verzahnungsmittel (26, 26') und über gleichzeitig mit den beiden ersten Verzahnungsmitteln (26, 26') in Eingriff stehende, an einem Drehkörper (28) vorgesehene zweite Verzahnungsmittel (27) verfügt, und mit an den einander zugewandten axialen Endbereichen der beiden Kolben (5, 5') vorgesehenen, sich axial überlappenden Axialvorsprüngen (32, 32'), die sich quer zur Längsachse (33) des Aufnahmeraumes (4) mit Abstand gegenüberliegen und die an ihren einander zugewandten Seitenflächen mit den ersten Verzahnungsmitteln (26, 26') versehen sind, wobei der die zweiten Verzahnungsmittel (27) aufweisende Drehkörper (28) in dem zwischen den beiden Axialvorsprüngen (32, 32') vorhandenen Zwischenraum (34) angeordnet und mit sich quer zur Längsachse (33) des Aufnahmeraumes (4) erstreckender Drehachse (35) bezüglich dem Gehäuse (1) drehbar gelagert ist, **dadurch gekennzeichnet, daß** das Gehäuse (1) im Umfangsbereich der beiden Kolben (5, 5') jeweils mit einem sich axial erstreckenden, einerseits radial innen zum Aufnahmeraum (4) und andererseits radial außen zu einer Außenfläche des Gehäuses (1) offenen Längsschlitz (12, 12') versehen ist, und daß jeder dieser Längsschlitze (12, 12') von einem Mitnehmer (13, 13') durchsetzt ist, der eine Mitnahmeverbindung zwischen dem jeweils zugeordneten Kolben (5, 5') und einem von zwei im äußeren Bereich des Gehäuses (1) verschiebbar angeordneten Greifelementträgern (14, 14') oder Greifelementen (17) herstellt, wobei die Mitnehmer (13, 13') rechtwinkelig zur Drehachse (35) des Drehkörpers (28) verlaufen.

2. Greifer nach Anspruch 1, **dadurch gekennzeichnet, daß** die Axialvorsprünge (32, 32') zahnstangenartig ausgebildet sind, wobei ihre einander zugewandten Verzahnungen die ersten Verzahnungsmittel (26, 26') bilden.

3. Greifer nach Anspruch 1 oder 2, **dadurch gekennzeichnet, daß** der Drehkörper (28) als Zahnrad ausgebildet ist.

4. Greifer nach Anspruch 1, **dadurch gekennzeichnet, daß** die ersten Verzahnungsmittel (26, 26') jeweils nur eine einzige Vertiefung enthalten, wobei die am Drehkörper (28) angeordneten zweiten Verzahnungsmittel (27) von lediglich zwei einander bezüglich der Drehachse (35) diametral entgegengesetzt angeordneten Vorsprüngen gebildet sind, die jeweils mit einer der Vertiefungen in Eingriff stehen.

5. Greifer nach Anspruch 1, **dadurch gekennzeichnet, daß** die ersten Verzahnungsmittel (26, 26') jeweils nur einen einzigen Vorsprung enthalten, wobei die am Drehkörper (28) angeordneten zweiten Verzahnungsmittel (27) von lediglich zwei einander bezüglich der Drehachse (35) diametral entgegengesetzt angeordneten Vertiefungen gebildet sind, die jeweils mit einem der Vorsprünge in Eingriff stehen.

6. Greifer nach einem der Ansprüche 1 bis 5, **dadurch gekennzeichnet, daß** der Drehkörper (28) drehbar auf einer den Aufnahmeraum (4) durchsetzenden, mit ihren beiden Endbereichen im Gehäuse (1) fixierten Lagerachse (36) angeordnet ist.

7. Greifer nach Anspruch 6, **dadurch gekennzeichnet, daß** der Drehkörper (28) axial verschieblich auf der Lagerachse (36) sitzt.

8. Greifer nach Anspruch 6 oder 7, **dadurch gekennzeichnet, daß** die Lagerachse (36) in eine das Gehäuse (1) durchsetzende Querbohrung (37) eingesetzt und insbesondere eingepreßt ist.

9. Greifer nach einem der Ansprüche 6 bis 8, **dadurch gekennzeichnet, daß** die Lagerachse (36) in einer das Gehäuse (1) durchsetzenden Querbohrung (37) einsitzt und dabei mit Abstand zur Außenfläche innerhalb des Gehäuses (1) endet, wobei in die äußeren Endabschnitte der Querbohrung (37) insbesondere von Schraubelementen gebildete, gehäusefest verankerte Verschlußelemente (43) eingesetzt sind.

## Claims

1. Fluid-operated gripper with a housing (1) containing a locating chamber (4) housing two pistons (5, 5') driven by fluid power to perform axial operating movements in opposing direction, each being connected or connectable to a gripper element (17), with a synchronising device (25) for synchronising the operating movements of the two pistons (5, 5'), provided with first gearing means (26, 26') mounted on the two pistons (5, 5') and second gearing means (27) simultaneously engaging the two first gearing means (26, 26') and mounted on a rotary body (28), and with axially overlapping axial projections (32, 32') located in axial end areas of the two pistons (5, 5') facing each other, which face each other at a distance at right angles to the longitudinal axis (33) of the locating chamber (4) and are provided with the first gearing means (26, 26') on their side surfaces facing each other, the rotary body (28) provided with the second gearing means (27) being located in the gap (34) between the two axial projections (32, 32') and rotatably mounted relative to the housing (1) with its axis of rotation (35) extending at right angles to the longitudinal axis (33) of the locating chamber (4), **characterised in that** the housing (1) is provided with longitudinal slots (12, 12') extending in the axial direction in the circumferential area of the two pistons (5, 5'), these being open radially inwards towards the locating chamber (4) on the one hand and radially outwards towards an external surface of the housing (1) on the other hand, and **in that** each of the longitudinal slots (12, 12') is penetrated by a driver (13, 13') establishing a driving connection between the allocated piston (5, 5') and one of two gripper element carriers (14, 14') or gripper elements (17) movably mounted in the outer area of the housing (1), the drivers (13, 13') extending at right angles to the axis of rotation (35) of the rotary body (28).

2. Gripper according to claim 1, **characterised in that** the axial projections (32, 32') are designed as gear racks, their teeth facing each other forming the first gearing means (26, 26').

3. Gripper according to claim 1 or 2, **characterised in that** the rotary body (28) is designed as a gear.

4. Gripper according to claim 1, **characterised in that** each of the first gearing means (26, 26') has only one recess, the second gearing means (27) mounted on the rotary body (28) being merely represented by two projections arranged diametrically opposite each other relative to the axis of rotation (35), each of these projections engaging one of the recesses.

5. Gripper according to claim 2, **characterised in that** each of the fist gearing means (26, 26') has only one projection, the second gearing means (27) mounted on the rotary body (28) being merely represented by two recesses arranged diametrically opposite each other relative to the axis of rotation (35), each of these recesses engaging one of the projections.

6. Gripper according to any of claims 1 to 5, **characterised in that** the rotary body (28) is rotatably mounted on a bearing axis (36) extending through the locating chamber (4), its two end areas being fixed in the housing (1).

7. Gripper according to claim 6, **characterised in that** the rotary body (28) is axially movable on the bearing axis (36).

8. Gripper according to claim 6 or 7, **characterised in that** the bearing axis (36) is installed and in particular pressed into a cross bore (37) extending through the housing (1).

9. Gripper according to any of claims 6 to 8, **characterised in that** the bearing axis (36) is located in a cross bore (37) extending through the housing (1), ending within the housing (1) at a distance from its external surface, sealing elements (43), in particular screw elements, anchored to the housing being installed in the outer end sections of the cross bore (37).

## Revendications

1. Pince de préhension actionnée au moyen d'un fluide, comportant un boîtier (1) qui contient une chambre de réception (4) dans laquelle se trouvent deux pistons (5, 5') qui peuvent être entraînés par la force d'un fluide en des mouvements axiaux de travail en sens contraire, lesquels pistons sont reliés ou peuvent être reliés chacun à un élément de préhension (17), comportant un dispositif de synchronisation (25) pour la synchronisation des mouvements de travail des deux pistons (5, 5'), qui dispose de premiers moyens à denture (26, 26') prévus sur les deux pistons (5, 5'), et de deuxièmes moyens à denture (27) simultanément en prise avec les deux premiers moyens à denture (26, 26') et prévus sur un corps tournant (28), et comportant des saillies axiales (32, 32') se recouvrant axialement, prévues dans les zones terminales axiales tournées l'une vers l'autre des deux pistons (5, 5'), lesquelles saillies axiales se font face à distance, transversalement à l'axe longitudinal (33) de la chambre de réception (4), et sont pourvues des premiers moyens à denture (26, 26') sur leurs surfaces latérales tournées l'une vers l'autre, le corps tournant (28), qui comporte les deuxièmes moyens à denture (27), étant disposé dans l'espace intermédiaire (34) compris entre les deux saillies axiales (32, 32') et étant monté de manière à pouvoir tourner par rapport au boîtier (1), avec son axe de rotation (35) s'étendant transversalement à l'axe longitudinal (33) de la chambre de réception (4), **caractérisée en ce que** le boîtier (1) est pourvu, dans la zone périphérique des deux pistons (5, 5'), d'une fente longitudinale (12, 12') s'étendant axialement, ouverte d'une part radialement vers l'intérieur par rapport à la chambre de réception (4) et d'autre part, radialement vers l'extérieur par rapport à une surface extérieure du boîtier (1), et **en ce que** chacune de ces fentes longitudinales (12, 12') est traversée par un entraîneur (13, 13') qui réalise une liaison d'entraînement entre le piston (5, 5') respectivement associé et l'un des deux supports d'élément de préhension (14, 14') ou des éléments de préhension (17), disposés coulissants dans la zone extérieure du boîtier (1), les entraîneurs (13, 13') s'étendant à angle droit par rapport à l'axe de rotation (35) du corps tournant (28).

2. Pince de préhension selon la revendication 1, **caractérisée en ce que** les saillies axiales (32, 32') sont réalisées à la manière de crémaillères, leurs dentures tournées l'une vers l'autre formant les premiers moyens à denture (26, 26').

3. Pince de préhension selon la revendication 1 ou 2, **caractérisée en ce que** le corps tournant (28) est conformé en roue dentée.

4. Pince de préhension selon la revendication 1, **caractérisée en ce que** les premiers moyens à denture (26, 26') ne comportent chacun qu'un seul renfoncement, les deuxièmes moyens à denture (27), disposés sur le corps tournant (28), étant formés uniquement par deux saillies disposées diamétralement opposées l'une à l'autre par rapport à l'axe de rotation (35), saillies qui sont en prise chacune avec l'un des renfoncements.

5. Pince de préhension selon la revendication 1, **caractérisée en ce que** les premiers moyens à denture (26, 26') ne comportent chacun qu'une seule saillie, les deuxièmes moyens à denture (27) disposés sur le corps tournant (28) étant formés uniquement par deux renfoncements diamétralement opposés l'un à l'autre par rapport à l'axe de rotation (35), renfoncements qui sont en prise chacun avec l'une des saillies.

6. Pince de préhension selon l'une des revendications 1 à 5, **caractérisée en ce que** le corps tournant (28) est monté tournant sur un axe de palier (36) traversant la chambre de réception (4) et fixé par ses deux zones terminales dans le boîtier (1).

7. Pince de préhension selon la revendication 6, **caractérisée en ce que** le corps tournant (28) est monté sur l'axe de palier (36) de manière à pouvoir coulisser axialement.

8. Pince de préhension selon la revendication 6 ou 7, **caractérisée en ce que** l'axe de palier (36) est inséré dans un trou transversal (37) traversant le boîtier (1) et est en particulier pressé à l'intérieur de celui-ci.

9. Pince de préhension selon l'une des revendications 6 à 8, **caractérisée en ce que** l'axe de palier (36) est inséré dans un trou transversal (37) traversant le boîtier (1), et se termine ainsi à distance de la surface extérieure, à l'intérieur du boîtier (1), des éléments d'obturation (43) formés en particulier par des éléments à vis, et ancrés solidairement au boîtier, étant insérés dans les parties terminales extérieures du trou transversal (37).
